# EUROPEAN PATENT SPECIFICATION

(11) **EP 4 159 695 B1**
(45) Date of publication and mention of the grant of the patent: **03.09.2025**
(21) Application number: 21811919.6
(22) Date of filing: 11.03.2021
(51) Int. Cl.: C02F 11/125, C02F 11/06, F26B 5/14, F26B 3/04, F26B 23/02, F26B 21/14, B30B 9/12, C02F 9/00, F26B 17/20

(54) **SOLID FECES TREATMENT APPARATUS AND INDIVIDUAL FECES TREATMENT SYSTEM INCLUDING SAME**
VORRICHTUNG ZUR BEHANDLUNG VON FESTEN FÄKALIEN UND SYSTEM ZUR BEHANDLUNG VON INDIVIDUELLEN FÄKALIEN DAMIT
APPAREIL DE TRAITEMENT DE MATIÈRE FÉCALE SOLIDE ET SYSTÈME DE TRAITEMENT DE MATIÈRE FÉCALE INDIVIDUELLE COMPRENANT CELUI-CI

(30) Priority: 27.05.2020 US 202063030749 P
(43) Date of publication of application: 05.04.2023
(60) Divisional application: 25189881.3
(73) Proprietor: Samsung Electronics Co., Ltd., Gyeonggi-do 16677 (KR)
(72) Inventor: KIM, Yongkwon, Suwon-si, Gyeonggi-do 16678 (KR); KIM, Ginam, Suwon-si, Gyeonggi-do 16678 (KR); KIM, Mijong, Suwon-si, Gyeonggi-do 16678 (KR); SHIN, Hyunsuk, Suwon-si, Gyeonggi-do 16678 (KR); CHANG, Wonsuk, Suwon-si, Gyeonggi-do 16678 (KR)
(74) Representative: Elkington and Fife LLP
(86) International application number: PCT/KR2021/003050
(87) International publication number: WO 2021/241857

(56) References cited:
- WO-A1-2018/031280
- IT-A1- MI20 090 367
- JP-A- 2001 288 473
- JP-A- 2005 211 896
- JP-A- 2007 105 605
- JP-A- H1 061 930
- JP-A- S60 202 800
- JP-A- S62 106 900
- JP-B2- 4 417 060
- JP-B2- 4 789 113
- KR-B1- 100 934 578
- KR-B1- 101 243 605

## Description

### TECHNICAL FIELD

The present disclosure relates to a solid feces treatment apparatus and an individual feces treatment system including the same.

### BACKGROUND ART

Generally, feces discharged from households are processed all at once at a large-scale excreta treatment facilities. However, in some regions where such large-scale excreta treatment facilities are not sufficiently established, feces may not be properly processed, and may be thrown out near residential areas. This may cause sanitary and environmental problems.

Accordingly, a feces treatment apparatus which enables direct processing of feces in each household is required in such residential areas. As a household feces treatment apparatus is installed in a bathroom of a household, it should be small-sized. In addition, considering the possibility of shortage of available energy, a household feces treatment apparatus that processes faces using as little energy as possible is desired.

IT MI20090367 A1 describes a plant for the transformation of animal manure, in particular swine or bovine, into electrical energy.

JP 4417060 B2 describes collecting and processing human waste, toilet drainage, raw garbage, and combustible waste.

KR 101243605 B1 describes a waste treatment method including thermal hydrolysis of waste, separation of solid fuel and liquids.

WO 2018/031280 A1 describes a solid waste treatment system including a solid-liquid separator module configured to receive mixed solid and liquid waste.

JP 4789113 B2 describes a technology for mixing livestock manure and urine sewage in a standard denitrification treatment facility.

JP S60202800 A describes reducing the cost in the drying stage of dehydrated cake of sludge by incinerating dried residue.

JP S62106900 A describes mechanically dewatering human waste collected from human waste and drying the obtained dehydrated human waste.

JP 2007/105605 A describes a drying unit that heats the object to be processed and performs a drying process.

KR 100934578 B1 describes a screw type dehydration apparatus having a selfrotated moving ring structure.

JP H1061930 A describes a waste incinerator with a first gas injection mechanism injecting first secondary combustion gas against flame at the side of a drying belt grate.

JP 2005 211896 A describes drying excreta flowing-in from an excreta storage tank in a vacuum evaporation tank.

JP 2001 288473 A describes a continuous garbage carbonizing apparatus comprising a garbage introducing means to which garbage is charged.

### DESCRIPTION OF EMBODIMENTS

### TECHNICAL PROBLEM

The present disclosure provides a small-sized solid feces treatment apparatus and an individual feces treatment system.

The present disclosure provides a solid feces treatment apparatus and an individual feces treatment system, which have reduced energy consumption.

The present disclosure provides a solid feces treatment apparatus and an individual feces treatment system, which have reduced harmful gas emission.

However, the technical problems to be solved are not limited thereto.

### SOLUTION TO PROBLEM

According to an aspect, there is provided a solid feces treatment apparatus according to claim 1.

The dehydrator may include a dehydration element, and the dehydration element may include a plurality of fixed discs and a plurality of moving discs, which are alternately arranged, and a dehydration screw penetrating the plurality of fixed discs and the plurality of moving discs, wherein the plurality of moving discs may move such that a center of each of the plurality of moving discs rotates around a centerline on which centers of the plurality of fixed discs are arranged.

A distance between a fixed disc and a moving disc immediately adjacent to each other, among the plurality of fixed discs and the plurality of moving discs, may be less than or equal to about 0.1 mm.

The dehydration element may include a first dehydration area and a second dehydration area arranged sequentially in a transfer direction of the dehydration screw, wherein, among the plurality of fixed discs and the plurality of moving discs, a distance between a fixed disc and a moving disc immediately adjacent to each other in the first dehydration area may be about 0.05 mm, and a distance between a fixed disc and a moving disc immediately adjacent to each other in the second dehydration area may be about 0.03 mm.

The dehydrator may further include a discharge element including a discharge hole through which second solid feces produced from the dehydration element are discharged, and a cutting element cutting the second solid feces discharged from the discharge hole, wherein the second solid feces cut by the cutting element may have a pellet shape.

An internal diameter of each of the plurality of moving discs may be less than an internal diameter of each of the plurality of fixed discs.

The dehydrator may further include a pressure element applying pressure on second solid feces discharged from the dehydration element, wherein the second solid feces may be discharged between the pressure element and the dehydration element, and have a flake shape.

The first dry screw may include aluminum, and the second dry screw includes stainless steel.

The first dry screw and the second dry screw may include a plurality of dry holes penetrating a thread of the first dry screw and at thread of the second dry screw.

Each of the first dry screw and the second dry screw may be provided in a pair, wherein a pair of first dry screws may be arranged such that threads of the first dry screws cross each other, and a pair of second dry screws may be arranged such that threads of the second dry screws cross each other.

The dryer may further include a third dry chamber provided between the first dry chamber and the second dry chamber, a third dry screw provided in the third dry chamber, a fourth dry chamber provided between the second dry chamber and the third dry chamber, and a fourth dry screw provided in the fourth dry chamber, wherein the second solid feces may be dried sequentially in the first dry chamber, the third dry chamber, the fourth dry chamber, and the second dry chamber.

The dryer may further include an intake element connected to the first dry chamber, and the intake element may circulate heat generated from the combustor in the dryer.

A lower portion of the second dry chamber may have a thermal conductivity higher than that of the first dry chamber.

The combustor may include a combustion drum defining a combustion path therein, a first grid plate provided at a lower portion of the combustion drum, and an ignition element combusting the third solid feces placed on the first grid plate.

The combustion drum may further include a plurality of first air holes provided under the first grid plate.

The combustion path may further include an air compression area in which air is compressed, and have a relatively narrow width in the air compression area.

The combustion drum may further include a plurality of second air holes provided adjacent to the air compression area.

The dryer includes a first dry chamber into which the second solid feces are input, a first dry screw provided in the first dry chamber, a second dry chamber discharging the third solid feces, and a second dry screw provided in the second dry chamber, wherein the second dry screw has a thermal resistance higher than that of the first dry screw, and the combustion path may be connected to an internal space of the second dry chamber.

The dry chamber may further include a transfer element provided between the second dry chamber and the combustion drum, wherein the transfer element may transfer the third solid feces to the combustion path.

According to another aspect, there is provided an individual feces treatment system according to claim 14.

According to another aspect, there is provided a method for solid feces treatment according to claim 15.

### ADVANTAGEOUS EFFECTS OF DISCLOSURE

The present disclosure may provide a small-sized solid feces treater and an individual feces treatment system.

The present disclosure may provide a solid feces treater and an individual feces treatment system with reduced energy consumption.

The present disclosure may provide a solid feces treater and an individual feces treatment system with reduced harmful gas emission.

However, the effects of the present disclosure are not limited thereto.

### BRIEF DESCRIPTION OF DRAWINGS

FIG. 1 is a perspective view of a solid feces treater according to an example embodiment.
FIG. 2 is another perspective view of the solid feces treater of FIG. 1.
FIG. 3 is a cross-sectional view of the solid feces treater of FIG. 1 taken along the line I-I'.
FIG. 4 is a cross-sectional view taken along the line II-II' of FIG. 1.
FIG. 5 is a cross-sectional view taken along the line III-III' of FIG. 1.
FIG. 6 is an enlarged view of the AA region of FIG. 3.
FIG. 7 is a diagram illustrating the dehydration element of FIG. 6.
FIG. 8 is a diagram illustrating the ring assembly of FIG. 7.
FIG. 9 is a diagram illustrating the fixed ring of FIG. 8.
FIG. 10 is a diagram illustrating the moving ring of FIG. 8.
FIG. 11 is a diagram illustrating the discharger and the cutter of FIG. 6.
FIG. 12 is an enlarged view of the BB region of FIG. 3.
FIG. 13 is a perspective view of the dry screw of FIG. 12.
FIG. 14 is an enlarged view of the CC region of FIG. 3.
FIG. 15 is an enlarged view of the DD region of FIG. 4.
FIG. 16 is a diagram corresponding to the AA region of FIG. 3 to illustrate a process of treating solid feces.
FIG. 17 is a diagram corresponding to the BB region of FIG. 3 to illustrate a process of treating solid feces.
FIG. 18 is a diagram corresponding to the CC region of FIG. 3 to illustrate a process of treating solid feces.
FIG. 19 is a diagram corresponding to the DD region of FIG. 4 to illustrate a process of treating solid feces.
FIG. 20 is a cross-sectional view of a solid feces treater according to an example embodiment, corresponding to the line II-II' of FIG. 1.
FIG. 21 is an enlarged view of the FF region of FIG. 20.
FIG. 22 is a block diagram of an individual feces treatment system according an example embodiment.
FIG. 23 is a diagram corresponding to the AA region of FIG. 3 to illustrate a dehydrator according to an example embodiment.
FIG. 24 is a diagram corresponding to the AA region of FIG. 3 to illustrate a process of treating solid feces.

### BEST MODE

According to an aspect, a solid feces treater includes a dehydrator extracting a liquid component from first solid feces to produce second solid feces, a dryer evaporating a liquid component of the second solid feces to produce third solid feces, and a combustor burning the third solid feces, wherein the second solid feces may have a solid content of about 25 % to about 30 %, and the third solid feces may have a solid content greater than or equal to about 90 % and less than about 100 %.

According to another aspect, an individual feces treatment system includes a toilet bowl, a liquid feces treatment apparatus receiving and treating liquid feces from the toilet bowl, a first solid feces treater receiving solid feces from the toilet bowl and water-treating the solid feces to produce first solid feces in a state of sludge, and a second solid feces treater receiving the first solid feces from the first solid feces treater and treating the first solid feces, wherein the second solid feces treater includes a dehydrator, a dryer, and a combustor, and wherein the dehydrator dehydrates the first solid feces to produce second solid feces having a solid content of about 25 % to about 30 %, the dryer dries the second solid feces to produce third solid feces having a solid content of about 90 % to about 100 %, and the combustor combusts the third solid feces.

### MODE OF DISCLOSURE

Hereinafter, embodiments will be described in detail with reference to the accompanying drawings. In the drawings, Like reference numerals in the drawings denote like elements, and sizes of components in the drawings may be exaggerated for clarity and convenience of explanation. Meanwhile, embodiments described below are provided only as an example, and thus can be embodied in various forms.

Hereinafter, it will be understood that when a component is "on" another component, it can be directly on the other component or indirectly over the other component in a non-contact manner.

An expression used in the singular encompasses the expression of the plural, unless it has a clearly different meaning in the context. When a portion "includes" an element, another element may be further included, rather than excluding the existence of the other element, unless otherwise described.

Further, the term "part" used herein refers to a unit processing at least one function or operation.

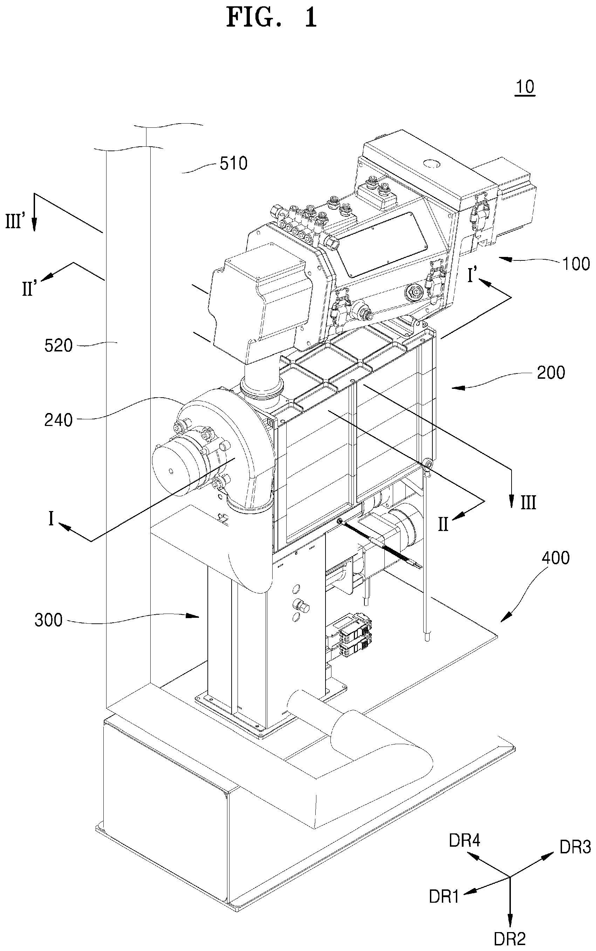

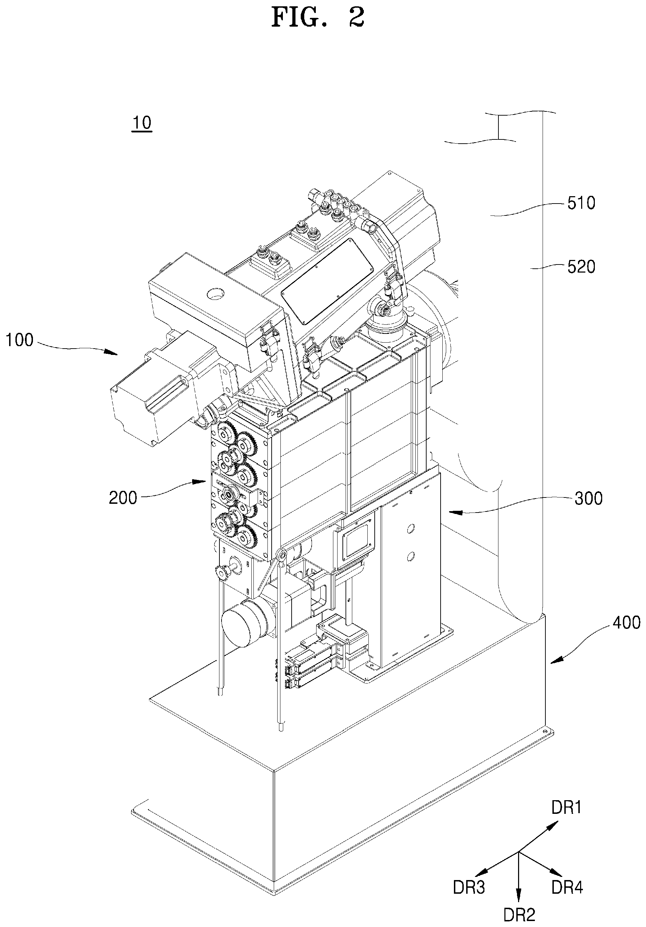

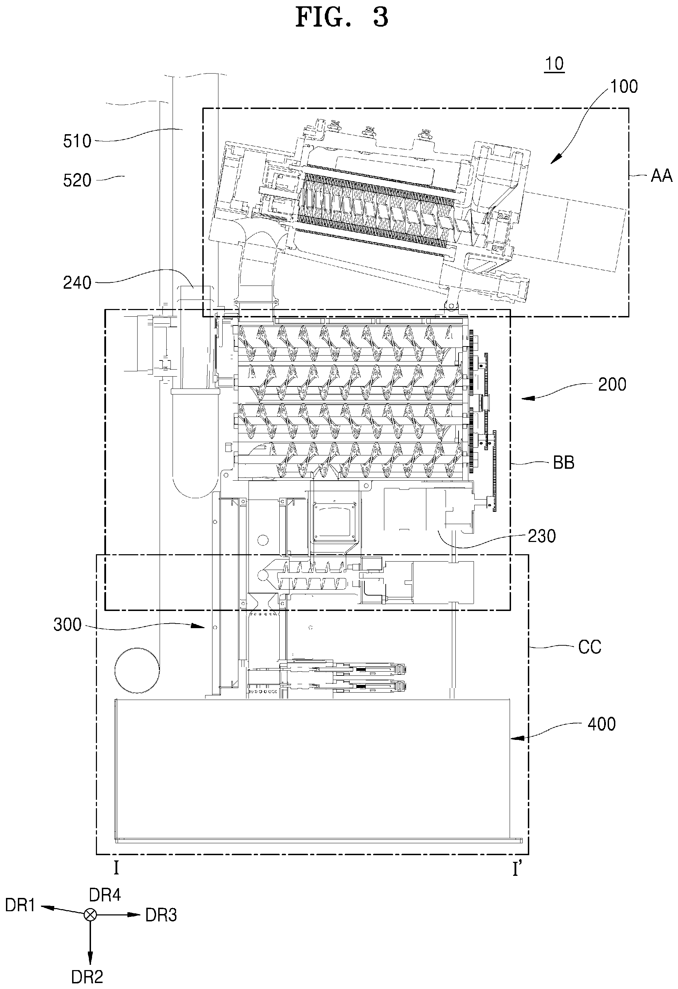

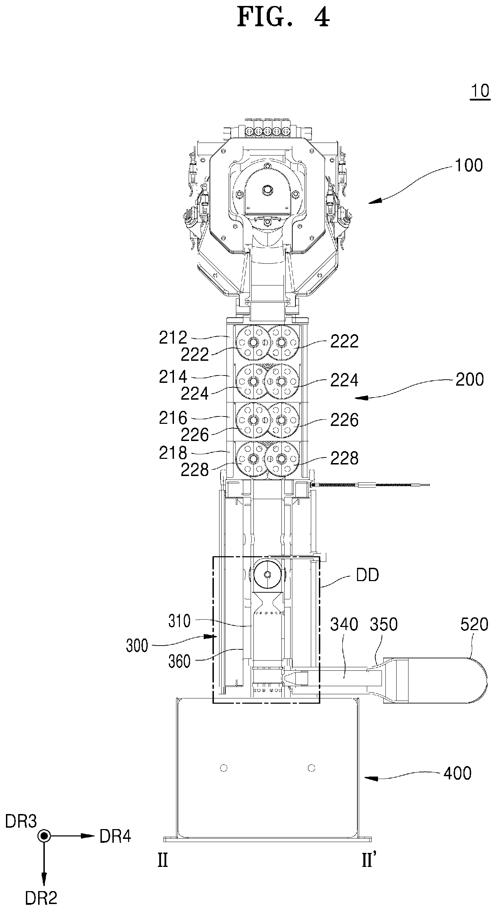

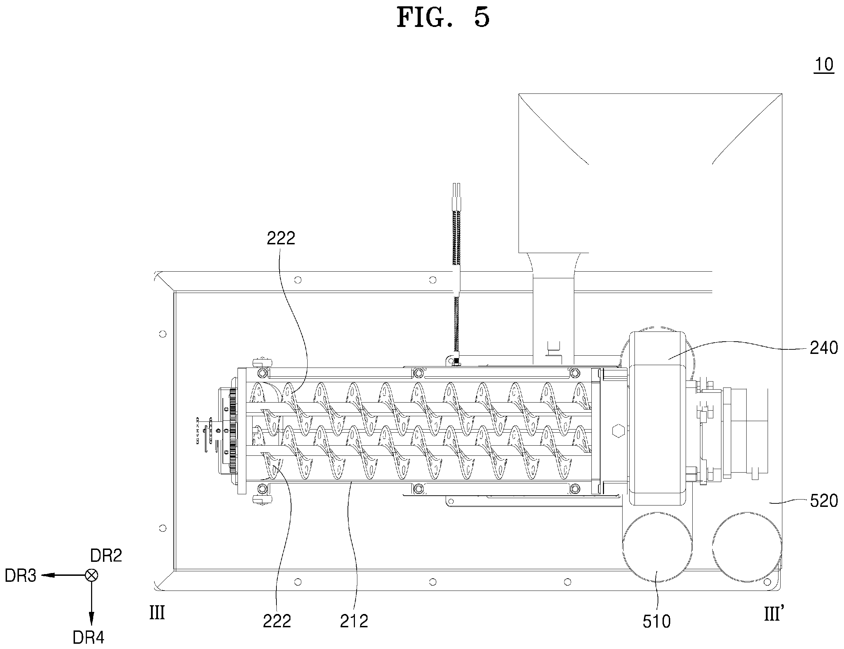

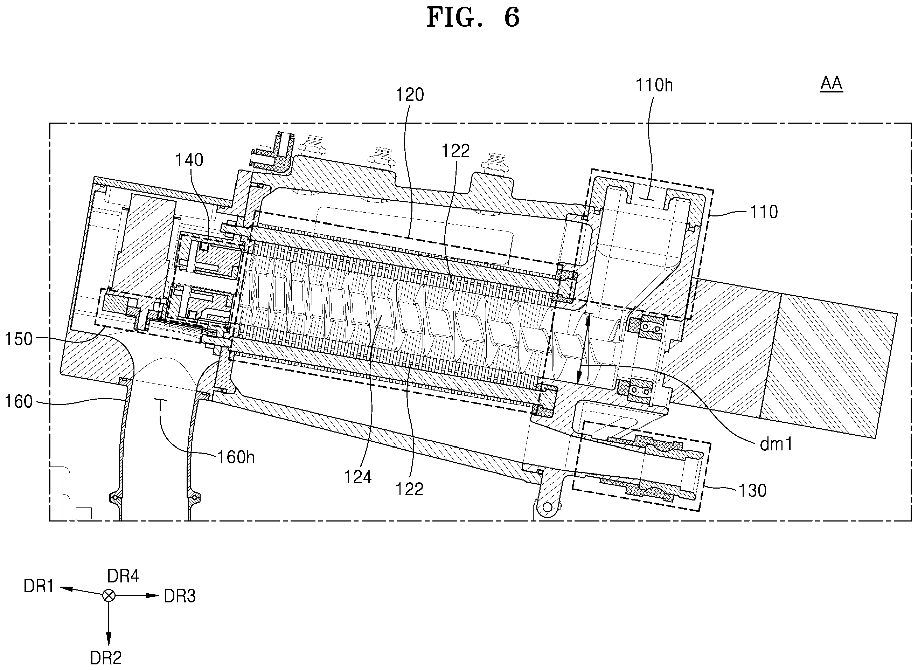

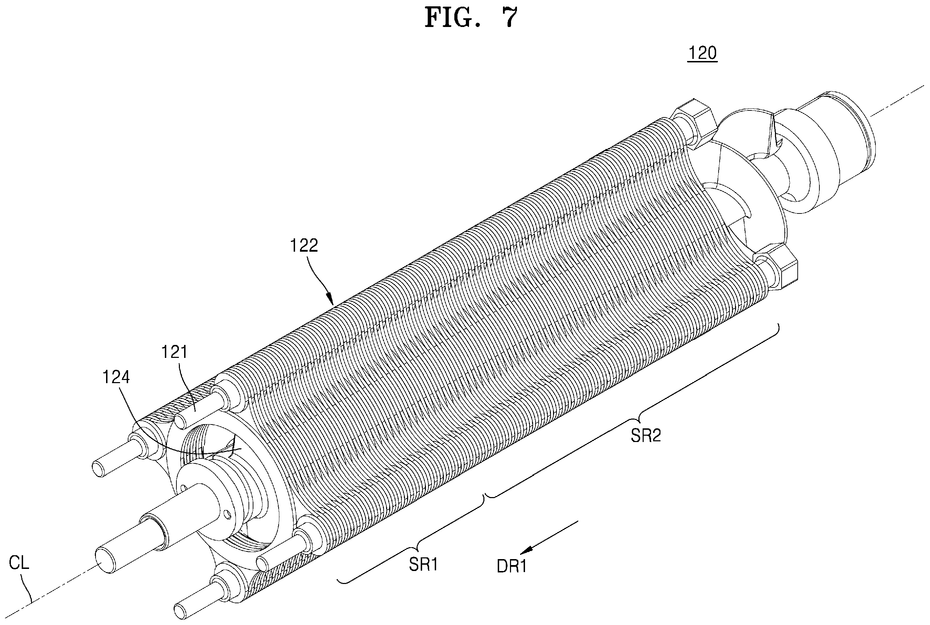

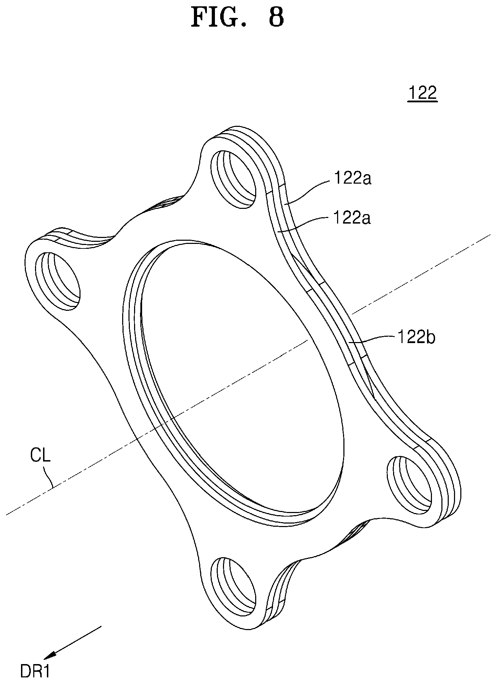

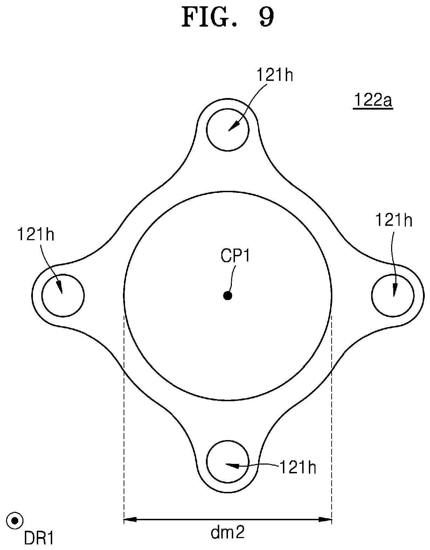

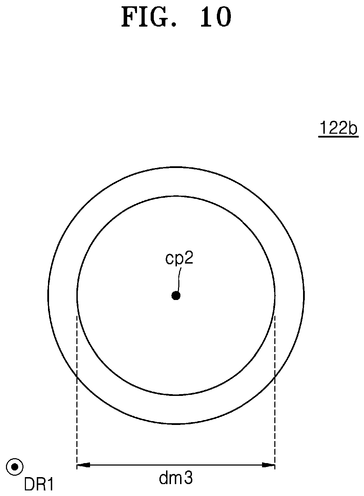

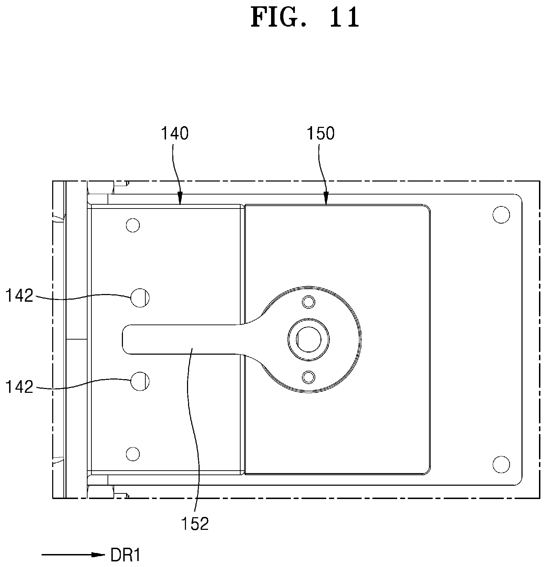

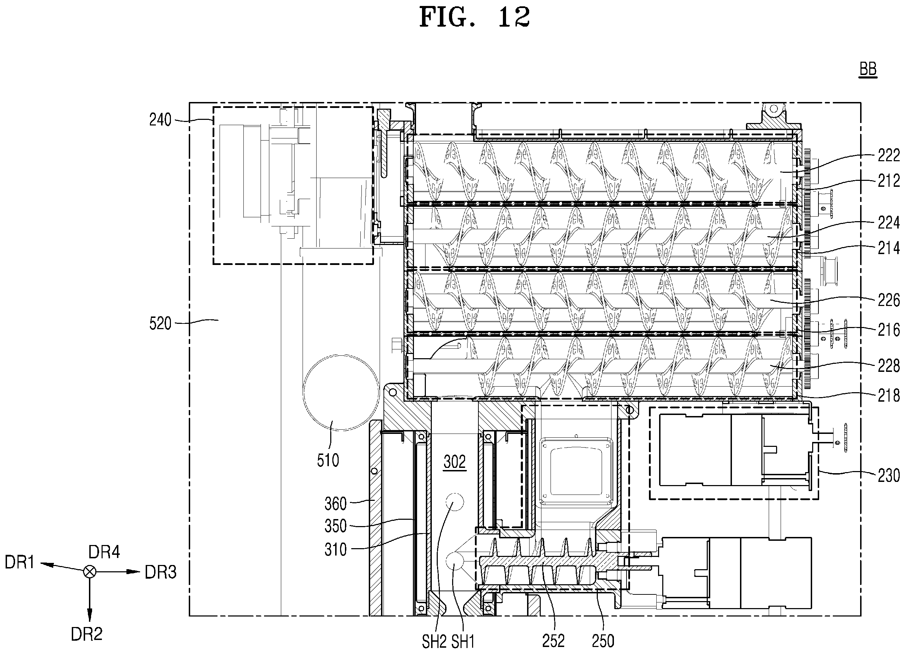

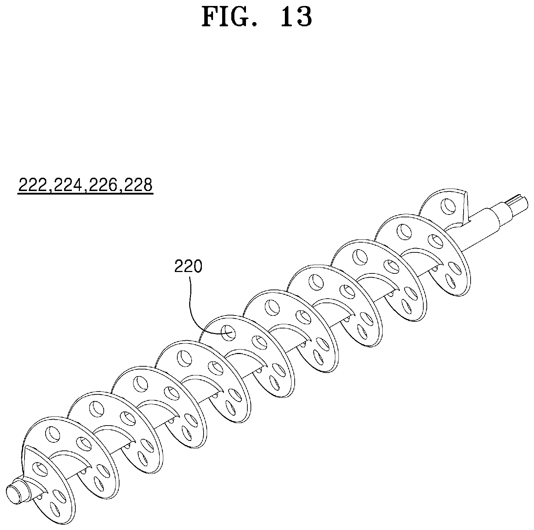

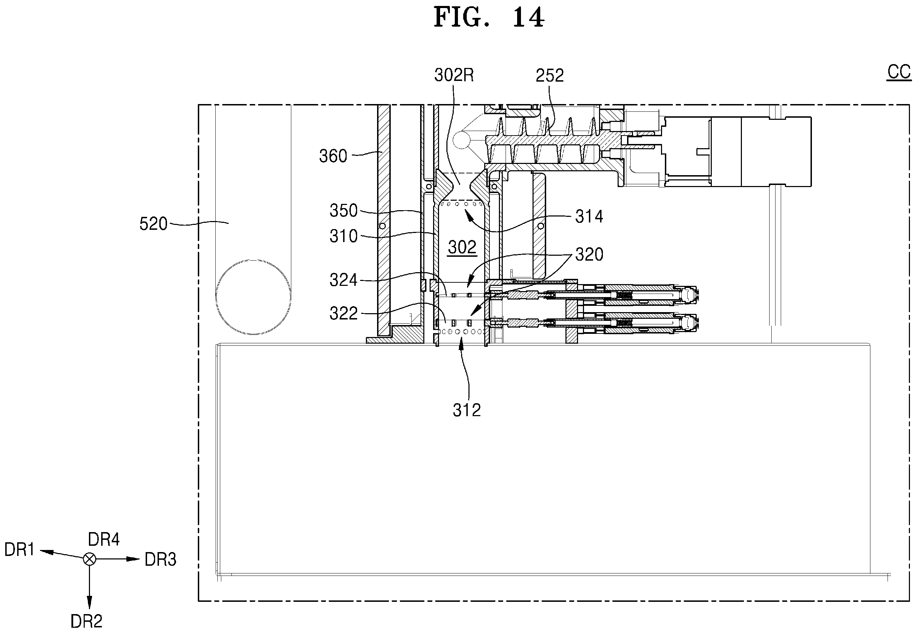

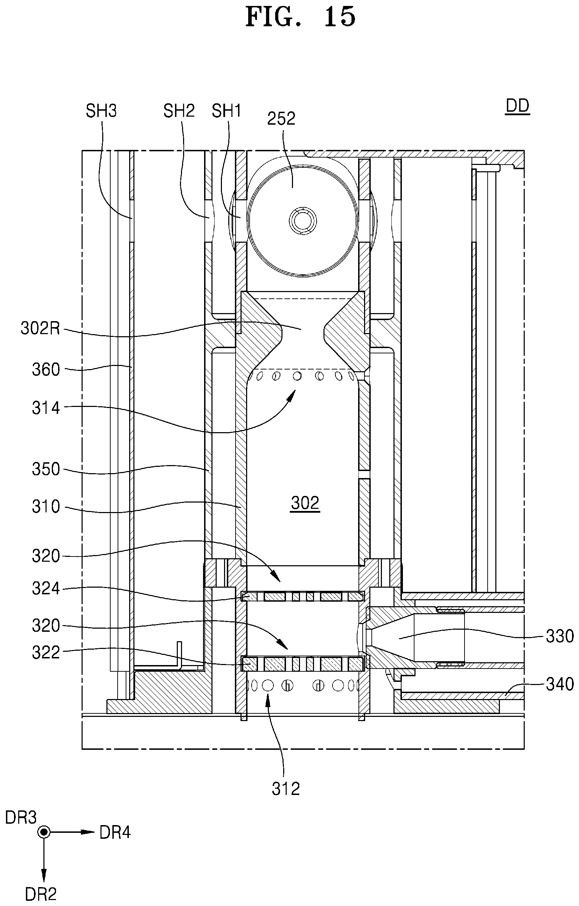

FIG. 1 is a perspective view of a solid feces treater according to an example embodiment. FIG. 2 is another perspective view of the solid feces treater of FIG. 1. FIG. 3 is a cross-sectional view of the solid feces treater of FIG. 1 taken along the line I-I'. FIG. 4 is a cross-sectional view taken along the line II-II' of FIG. 1. FIG. 5 is a cross-sectional view taken along the line III-III' of FIG. 1. FIG. 6 is an enlarged view of the AA region of FIG. 3. FIG. 7 is a diagram illustrating the dehydration element of FIG. 6. FIG. 8 is a diagram illustrating the ring assembly of FIG. 7. FIG. 9 is a diagram illustrating the fixed ring of FIG. 8. FIG. 10 is a diagram illustrating the moving ring of FIG. 8. FIG. 11 is a diagram illustrating the discharger and the cutter of FIG. 6. FIG. 12 is an enlarged view of the BB region of FIG. 3. FIG. 13 is a perspective view of the dry screw of FIG. 12. FIG. 14 is an enlarged view of the CC region of FIG. 3. FIG. 15 is an enlarged view of the DD region of FIG. 4.

With reference to FIGS. 1 to 15, a solid feces treater 10 may be provided. The solid feces treater 10 may reduce or remove liquid components in solid feces and then incinerate the solid feces. The solid feces treater 10 may be installed and used in each household or portable toilet. For example, the solid feces treater 10 may treat solid feces discharged from a single toilet bowl. The solid feces treater 10 may include a dehydrator 100, a dryer 200, a first pipe 510, a combustor 300, a recollect container 400, and a second pipe 520.

As illustrated in FIG. 6, the dehydrator 100 may include a first solid feces input element 110, a dehydration element 120, a liquid component discharge pipe 130, a discharger 140, a cutter 150, and a second solid feces discharger 160. The first solid feces input element 110 may receive first solid feces from the outside of the dehydrator 100. The first solid feces may refer to sludge obtained by water-treating the feces. A solid content of the first solid feces may be 2 % to 3 %. The solid content may refer to a ratio of solid components in the feces. The first solid feces input element 110 may include a first solid feces input hole 110h through which the first solid feces are input.

The dehydration element 120 may include a ring assembly 122 and a dehydration screw 124. The dehydration element 120 may dehydrate the first solid feces to generate second solid feces. A solid content of the second solid feces may be higher than that of the first solid feces. For example, the solid content of the second solid feces may be 25 % to 30 %.

As illustrated in FIGS. 7 to 10, the ring assembly 122 may include a plurality of fixed rings 122a and a plurality of moving rings 122b. For concise description, two fixed rings 122a and one moving ring 122b are illustrated. The plurality of fixed rings 122a may be arranged in a first direction DR1. The plurality of fixed rings 122a may each have a fixed position. For example, the plurality of fixed rings 122a may be arranged on a centerline CL formed of center points cp1 of the plurality of fixed rings 122a extending in the first direction DR1. An internal diameter dm2 of the plurality of fixed rings 122a may be greater than a diameter dm1 of the dehydration screw 124.

The plurality of moving rings 122b may be arranged between a pair of adjacent fixed rings 122a. Although FIG. 8 illustrates that one moving ring 122b is arranged between a pair of fixed rings 122a, this is only an example. **In** another example, two or three moving rings 122b may be provided between a pair of immediately adjacent fixed rings 122a. An internal diameter dm3 of the plurality of moving rings 122b may be less than the internal diameter dm2 of the plurality of fixed rings 122a and the diameter dm1 of the dehydration screw 124. One moving ring 122b may be in contact with a thread of the dehydration screw 124 at one point at a time. When the dehydration screw 124 rotates, a contact point of the thread and one moving ring 122b may move along an internal circumference of the moving ring 122b. As the internal diameter dm3 of the moving ring 122b is less than the diameter dm1 of the dehydration screw 124, the thread of the dehydration screw 124 may push the moving ring 122b at the contact point. The moving ring 122b may be pushed by the thread of the dehydration screw 124 and moved in an outward direction (i.e., a radial direction). When the dehydration screw 124 rotates, a point at which the moving ring 122b is pushed by the thread of the dehydration screw 124 may move along the internal circumference of the moving ring 122b. Accordingly, the plurality of moving rings 122b may move such that center points cp2 of the plurality of moving rings 122b rotate around the centerline CL.

A distance between immediately adjacent rings (e.g., immediately adjacent fixed ring 122a and moving ring 122b or a pair of immediately adjacent moving rings 122b) may be less than or equal to 0.1 mm. The ring assembly 122 may include a first dehydration area SR1 and a second dehydration area SR2 arranged in the first direction DR1. For example, a length ratio between the first dehydration area SR1 and the second dehydration area SR2 may be 2:1. A distance between a pair of immediately adjacent rings may be less in the second dehydration area SR2 than in the first dehydration area SR1. For example, a distance between a pair of immediately adjacent rings may be about 0.05 mm in the first dehydration area SR1, and a distance between a pair of immediately adjacent rings may be about 0.03 mm in the second dehydration area SR2. Due to the varying distance between a pair of immediately adjacent rings in the first dehydration area SR1 and the second dehydration area SR2, the dehydration efficiency of the first solid feces may be improved. The liquid component removed from the first solid feces in the first and second dehydration areas SR1 and SR2 may be discharged to the outside through the liquid component discharge pipe 130. The first solid feces which have passed through the first and second dehydration areas SR1 and SR2 may be referred to as the second solid feces.

The dehydration screw 124 may extend in the first direction DR1. The dehydration screw 124 may transfer the first solid feces in the first direction DR1. The dehydration screw 124 may pass through the ring assembly 122. The dehydration screw 124 may supply the second solid feces to the discharger 140.

The discharger 140 may discharge the second solid feces transferred from the dehydration screw 124 in a required thickness. As illustrated in FIG. 11, the discharger 140 may discharge the second solid feces through a discharge hole 142. The size of the discharge hole 142 may be determined such that the second solid feces have a required thickness. Although the drawings illustrate that the discharge hole 142 has a circular shape, this is only an example. In another example, the discharge hole 142 may have a polygonal shape.

The cutter 150 may cut the second solid feces discharged from the discharge hole 142 such that the second solid feces have a required length. The cutter 150 may include a blade 152 rotating at a steady speed. The blade 152 may be arranged adjacent to the discharge hole 142. During when the second solid feces are discharged from the discharge hole 142, the blade 152 may rotate and cut the second solid feces into a certain length. The second solid feces may have a pellet shape by the discharger 140 and the cutter 150.

The second solid feces discharger 160 may be provided below the discharger 140 and the cutter 150. The second solid feces discharger 160 may include a second solid feces discharge outlet 160h. The second solid feces cut by the cutter 150 may be inserted into the second solid feces discharge outlet 160h.

As illustrated in FIG. 12, the dryer 200 may include a first dry chamber 212, a second dry chamber 214, a third dry chamber 216, a fourth dry chamber 218, a first dry screw 222, a second dry screw 224, a third dry screw 226, a fourth dry screw 228, a dry screw driving element 230, an intake element 240, and a transfer element 250. The dryer 200 may evaporate liquid components of the second solid feces. The first dry chamber 212, the second dry chamber 214, the third dry chamber 216, and the fourth dry chamber 218 may be arranged in order in a second direction DR2. The first dry chamber 212 may be arranged most adjacent to the dehydrator 100. The fourth dry chamber 218 may be arranged most adjacent to the combustor 300. The fourth dry chamber 218 may include a material having a higher heat conductivity than the first to third dry chambers 212, 214, and 216. For example, the fourth dry chamber 218 may include copper alloy, and the first to third dry chambers 212, 214, and 216 may include stainless steel (e.g., SUS). Accordingly, the heat generated from the combustor 300 may be conducted smoothly along the fourth dry chamber 218.

The internal spaces of the first to fourth dry chambers 212, 214, 216, and 218 may extend in a third direction DR3 intersecting with the first direction DR1 and the second direction DR2. The internal spaces of the first to fourth dry chambers 212, 214, 216, and 218 may be connected to each other in order. Each of the first to fourth dry chambers 212, 214, 216, and 218 may have an entrance and an exit. The entrances of the first to fourth dry chambers 212, 214, 216, and 218 may be openings through which the second solid feces are input into the first to fourth dry chambers 212, 214, 216, and 218. The exits of the first to third dry chambers 212, 214, and 216 may be openings through which the second solid feces are discharged from the first to third dry chambers 212, 214, and 216. The exit of the fourth dry chamber 218 may be an opening through which third solid feces are discharged from the fourth dry chamber 218. The entrance of the first dry chamber 212 may be connected with the second solid feces discharge outlet 160h. The internal space of the fourth dry chamber 218 may be connected with an internal space of the transfer element 250 and an internal space of a combustion drum 310 to be described. The entrances of the first to fourth dry chambers 212, 214, 216, and 218 may be respectively apart from the exits of the first to fourth dry chambers 212, 214, 216, and 218 in the third direction DR3. The exits of the first to third dry chambers 212, 214, and 216 may be respectively connected with the entrances of the second to fourth dry chambers 214, 216, and 218. Accordingly, the internal spaces of the first to fourth dry chambers 212, 214, 216, and 218 may be connected to each other in zigzags.

As illustrated in FIG. **4****,** the first dry screw 222, the second dry screw 224, the third dry screw 226, and the fourth dry screw 228 may be provided in the first to fourth dry chambers 212, 214, 216, and 218, respectively. The first to fourth dry screws 222, 224, 226, and 228 may be substantially identical to each other. Each of the first to fourth dry screws 222, 224, 226, and 228 may be provided in pairs. For concise description, a pair of first dry screws 222 is described, and any redundant descriptions on the second to fourth dry screws 224, 226, and 228 are omitted. The first dry screws 222 of the pair of first dry screws 222 may be substantially identical to each other. The pair of first dry screws 222 may be arranged such that threads of the first dry screws 222 intersect with each other. The pair of first dry screws 222 may extend in the third direction DR3.

The first to fourth dry screws 222, 224, 226, and 228 may be operated by the dry screw driving element 230. For example, the dry screw driving element 230 may include a motor. Chains and gears transmitting power of the dry screw driving element 230 to the first to fourth dry screws 222, 224, 226, and 228 may be provided between the first to fourth dry screws 222, 224, 226, and 228.

The second solid feces input into the first dry chamber 212 may be transferred along a zigzag path in the internal spaces of the first to fourth dry chambers 212, 214, 216, and 218. Specifically, the second solid feces may be transferred in the third direction DR3 by the first and third dry screws 222 and 226 in the first and third dry chambers 212 and 216, and may be transferred in an opposite direction of the third direction DR3 by the second and fourth dry screws 224 and 228 in the second and fourth dry chambers 214 and 218.

As illustrated in FIG. 13, the first to fourth dry screws 222, 224, 226, and 228 may include a plurality of dry holes 220 penetrating the threads of the first to fourth dry screws 222, 224, 226, and 228. Although the drawings illustrate that the dry holes 220 have a circular shape, this is only an example. In another example, the plurality of dry holes 220 may have a polygonal shape. The plurality of dry holes 220 may move hot air generated by the combustor 300 inside the first to fourth dry chambers 212, 214, 216, and 218 or facilitate the flow of hot air. The hot air may be supplied into the fourth dry chamber 218 and may sequentially pass through the third dry chamber 216, the second dry chamber 214, and the first dry chamber 212, drying the second solid feces in the first to fourth dry chambers 212, 214, 216, and 218.

The intake element 240 may be connected with the first dry chamber 212. An inlet of the intake element 240 may be arranged adjacent to an area in which the second solid feces are input into the first dry chamber 212. The intake element 240 may suck air in the first dry chamber 212. Accordingly, the hot air generated by the combustor 300 may move from the fourth dry chamber 218 to the first dry chamber 212. An outlet of the intake element 240 may be connected with the first pipe 510. The hot air that has flowed to the intake element 240 from the first dry chamber 212 may be discharged to the outside of the solid feces treater 10 through the first pipe 510.

The transfer element 250 may receive the third solid feces from the fourth dry chamber 218. The third solid feces may refer to the second solid feces dried by passing through the first to fourth dry chambers 212, 214, 216, and 218. The transfer element 250 may transfer the third solid feces to the combustor 300 by using a transfer screw 252. For example, the transfer element 250 may input the third solid feces to a combustion path 302 to be described.

As illustrated in FIGS. 14 and 15, the combustor 300 may include the combustion drum 310, a first grid plate 322, a second grid plate 324, an igniter 330, an igniter case 340, a first combustion drum case 350, and a second combustion drum case 360. The combustion path 302 may be defined by the combustion drum 310. The combustion path 302 may extend in the second direction DR2. The combustion path 302 may be connected with the internal space of the fourth dry chamber 218. The hot air generated by combusting the third solid feces may pass through the combustion path 302 and flow into the fourth dry chamber 218.

The first grid plate 322 may be provided at a lower portion of the combustion path 302. The first grid plate 322 may move in the third direction DR3 of in the opposite direction of the third direction DR3 to open or close the combustion path 302. When the third solid feces are input to the combustion path 302 by the transfer element 250, the first grid plate 322 may block the combustion path 302. The third solid feces input to the combustion path 302 by the transfer element 250 may be transferred onto the first grid plate 322. For example, the third solid feces may drop on the first grid plate 322. The first grid plate 322 may support the third solid feces while the third solid feces are incinerated. After the incineration of the third solid feces is completed, the first grid plate 322 may open the combustion path 302. The ashes generated by the incineration of the third solid feces may be transferred to the recollect container from the first grid plate 322. The first grid plate 322 may include a plurality of grid holes 320 extending in the second direction DR2. The plurality of grid holes 320 may be a passage through which oxygen and combustion gases flow.

The second grid plate 324 may be provided on the first grid plate 322. The first grid plate 322 and the second grid plate 324 may be apart from each other in the second direction DR2. The second grid plate 324 may move in the third direction DR3 of in the opposite direction of the third direction DR3 to open or close the combustion path 302. During when the third solid feces are input from the transfer element 250 to the first grid plate 322, the second grid plate 324 may open the combustion path 302. During the incineration of the third solid feces, the second grid plate 324 may close the combustion path 302. The second grid plate 324 may include a plurality of grid holes 320 extending in the second direction DR2. The plurality of grid holes 320 may be a passage through which oxygen and combustion gases flow.

The combustion drum 310 may include a plurality of first oxygen holes 312, a plurality of second oxygen holes 314, and an air compression area 302R. The plurality of first oxygen holes 312 and the plurality of second oxygen holes 314 may supply oxygen to the combustion path 302 from the outside of the combustion drum 310. The plurality of first oxygen holes 312 may be provided adjacent to the first grid plate 322. For example, the plurality of first oxygen holes 312 may be provided below the first grid plate 322. The plurality of first oxygen holes 312 may be arranged in a circumferential direction of the combustion drum 310. The plurality of second oxygen holes 314 may be arranged adjacent to the transfer element 250. The plurality of second oxygen holes 314 and the plurality of first oxygen holes 312 may be apart from each other in the second direction DR2. The plurality of second oxygen holes 314 may be arranged in a circumferential direction of the combustion drum 310.

The air compression area 302R may be an area of the combustion path 302, defined by an inner side of the combustion drum 310 protruding convexly. The air compression area 302R may be provided between the transfer element 250 and the plurality of second oxygen holes 314. A width of the air compression area 302R may be less than a width of areas of the combustion path 302 other than the air compression area 302R. Accordingly, air passing through the air compression area 302R may be compressed, and the temperature of the air may increase. The harmful gases generated during the combustion of the third solid feces may be burned and removed in the air compression area 302R. For example, nitrogen oxide (NOₓ) may be burned and decomposed into nitrogen (N₂) in the air compression area 302R, and carbon monoxide (CO) may be burned and oxidized into carbon dioxide (CO₂) in the air compression area 302R.

The igniter 330 may be provided between the first grid plate 322 and the second grid plate 324. The igniter 330 may ignite the third solid feces on the first grid plate 322. The ignition method of the igniter 330 may be determined according to the need. For example, the igniter 330 may use an electric ignition method or a gas ignition method.

The first combustion drum case 350 may surround the combustion drum 310. The first combustion drum case 350 may be apart from the combustion drum 310.

The second combustion drum case 360 may surround the first combustion drum case 350. The second combustion drum case 360 may apart from the first combustion drum case 350. Oxygen may move between the first combustion drum case 350 and the combustion drum 310 and flow into the combustion path 302 through the plurality of first oxygen holes 312 and the plurality of second oxygen holes 314.

A first window SH1, a second window SH2, and a third window SH3 may be provided at the combustion drum 310, the first combustion drum case 350, and the second combustion drum case 360, respectively to see the combustion path 302 from the outside of the second combustion drum case 360. The first to third windows SH1, SH2, and SH3 may be arranged to overlap each other in a fourth direction DR4. The first to third windows SH1, SH2, and SH3 may be transparent and have thermal resistance. For example, the first to third windows SH1, SH2, and SH3 may include glass or plastic.

The igniter case 340 may be apart from the igniter 330 and surround the igniter 330. A space between the igniter case 340 and the igniter 330 may be connected with a space between the first combustion drum case 350 and the combustion drum 310. The igniter case 340 may be connected with the second pipe 520. The second pipe 520 may be a pipe into which oxygen flows from the outside of the solid feces treater 10. The oxygen which has flowed through the second pipe 520 may pass through the space between the igniter case 340 and the igniter 330 and flow between the first combustion drum case 350 and the combustion drum 310.

The recollect container 400 may be provided below the combustor. The ashes generated by the incineration of the third solid feces may be transferred to the recollect container 400 when the first grid plate 322 is open. For example, the ashes may drop into the recollect container 400. A separable drawer (not shown) may be provided in the recollect container 400. The ashes may be collected in the drawer. A user of the solid feces treater 10 may separate the separable drawer from the recollect container 400 and remove the ashes.

Hereinafter, a process of treating solid feces by using the solid feces treater 10 described with reference to FIGS. 1 to 15 is described.

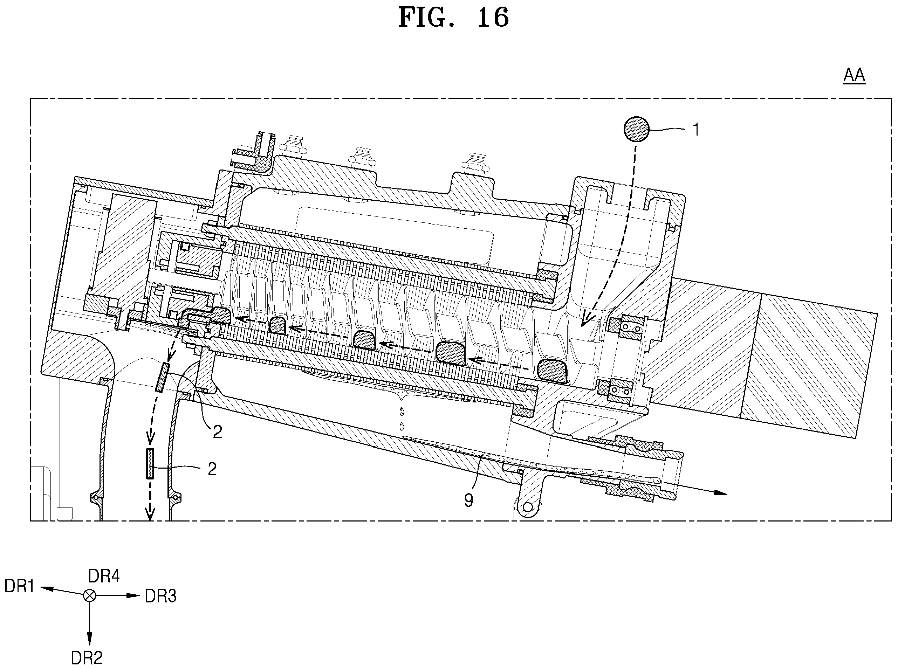

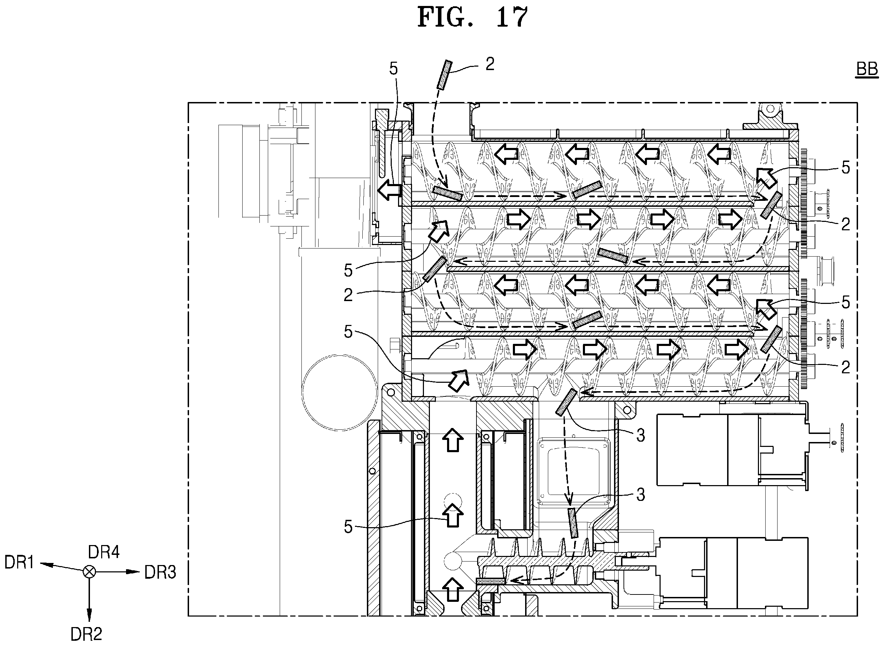

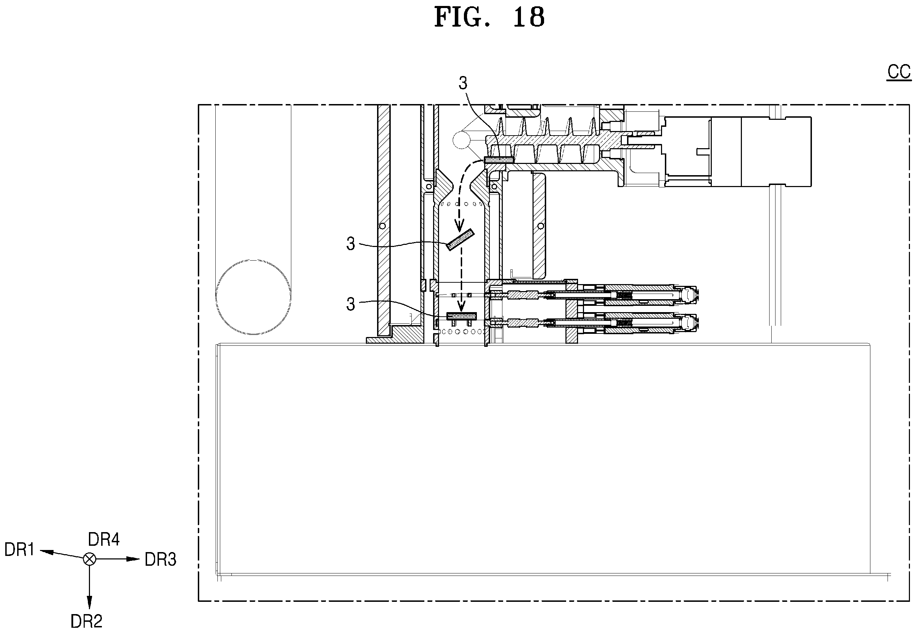

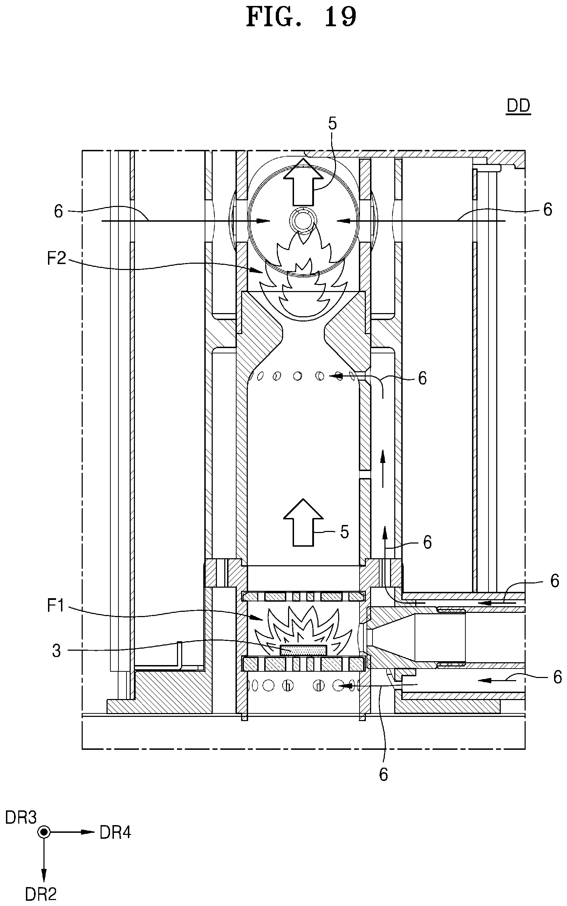

FIG. 16 is a diagram corresponding to the AA region of FIG. 3 to illustrate a process of treating solid feces. FIG. 17 is a diagram corresponding to the BB region of FIG. 3 to illustrate a process of treating solid feces. FIG. 18 is a diagram corresponding to the CC region of FIG. 3 to illustrate a process of treating solid feces. FIG. 19 is a diagram corresponding to the DD region of FIG. 4 to illustrate a process of treating solid feces. For concise description, reference numerals for the components of the solid feces treater 10 are omitted. The reference numerals for the components of the solid feces treater 10 are as shown in FIGS. 1 to 15.

With reference to FIG. 16, first solid feces 1 may be input to the dehydrator 100 through the first solid feces input hole 110h. The first solid feces 1 may refer to sludge obtained by water-treating the feces. For example, a solid content of the first solid feces 1 may be 2 % to 3 %.

The first solid feces 1 may be transferred by the dehydration screw 124. A liquid component 9 included in the first solid feces 1 may be discharged between the plurality of fixed rings 122a and the plurality of moving rings 122b. The liquid component 9 may be discharged to the outside of the dehydrator 100 through the liquid component discharge pipe 130. The dehydration efficiency of the first solid feces 1 may be greater when a distance between the rings 122a and 122b arranged in the first dehydration area SR1 adjacent to the first solid feces input hole 110h is greater than a distance between the rings 122a and 122b arranged in the second dehydration area SR2 adjacent to the second solid feces discharge outlet 160h than when the distance between the rings 122a and 122b is constant.

The first solid feces 1 dehydrated at the dehydration element 120 may be referred to as second solid feces 2. A solid content of the second solid feces 2 may be 25 % to 30 %. The second solid feces 2 may be input to the discharger 140 by the dehydration screw 124. The second solid feces 2 may be discharged in a certain width through the discharge hole 142.

The cutter 150 may cut the second solid feces 2 discharged from the discharge hole 142 by using the blade 152. Accordingly, the second solid feces 2 may have a pellet shape having a certain width and a certain length. The second solid feces 2 having a pellet shape may be transferred to the second solid feces discharge outlet 160h. For example, the second solid feces 2 may drop into the second solid feces discharge outlet 160h.

With reference to FIG. 17, the second solid feces 2 may be input to the first dry chamber 212 through the entrance of the first dry chamber 212. The second solid feces 2 may be transferred in the first to fourth dry chambers 212, 214, 216, and 218 by the first to fourth dry screws 222, 224, 226, and 228. The hot air generated at the combustor 300 may pass through the fourth dry chamber 218, the third dry chamber 216, the second dry chamber 214, and the first dry chamber 212 in this order. The plurality of dry holes 220 may be formed at the first to fourth dry screws 222, 224, 226, and 228 to facilitate the flow of hot air. The second solid feces 2 may be dried by hot air when passing through the first to fourth dry chambers 212, 214, 216, and 218. When hot air is not supplied in the first to fourth dry chambers 212, 214, 216, and 218 (e.g., when the combustion process is not performed at the combustor 300), the second solid feces may be naturally dried in the first to fourth dry chambers 212, 214, 216, and 218. The second solid feces 2 which are dried while passing through the first to fourth dry chambers 212, 214, 216, and 218 may be referred to as third solid feces 3. A solid content of the third solid feces 3 may be 90 % to 100 %. The third solid feces 3 may be transferred from the fourth dry chamber 218 to the transfer element 250. For example, the third solid feces 3 may drop into the transfer element 250.

With reference to FIG. 18, the transfer screw 252 in the transfer element 250 may transfer the third solid feces 3 to the combustor 300. The third solid feces 3 may be transferred from the transfer element 250 onto the first grid plate 322. For example, the third solid feces 3 may drop on the first grid plate 322. When the third solid feces 3 are supplied on the first grid plate 322, the second grid plate 324 may be in an open state.

With reference to FIG. 19, after the third solid feces 3 are supplied on the first grid plate 322, the second grid plate 324 may be closed. The igniter 330 may ignite the third solid feces 3 supplied on the first grid plate 322. Combustion of the third solid feces 3 may be referred to as a first combustion F1. Hot air 5 may be generated by the first combustion F1. The hot air 5 may rise through the combustion path 302. The hot air 5 may further rise in temperature in the air compression area 302R. In an embodiment, the hot air 5 may include harmful gases (e.g., nitrogen oxide (NOₓ) and carbon monoxide (CO)). The harmful gases may be combusted in the air compression area 302R. Combustion of harmful gases may be referred to as a second combustion F2. The harmful gases may be removed by the second combustion F2. For example, nitrogen oxide (NOₓ) may be decomposed into nitrogen (N₂), and carbon monoxide (CO) may be oxidized into carbon dioxide (CO₂).

The combustion of the third solid feces 3 may leave ashes. After the combustion process of the third solid feces 3, the first grid plate 322 is opened, and the ashes may be accommodated in the recollect container 400.

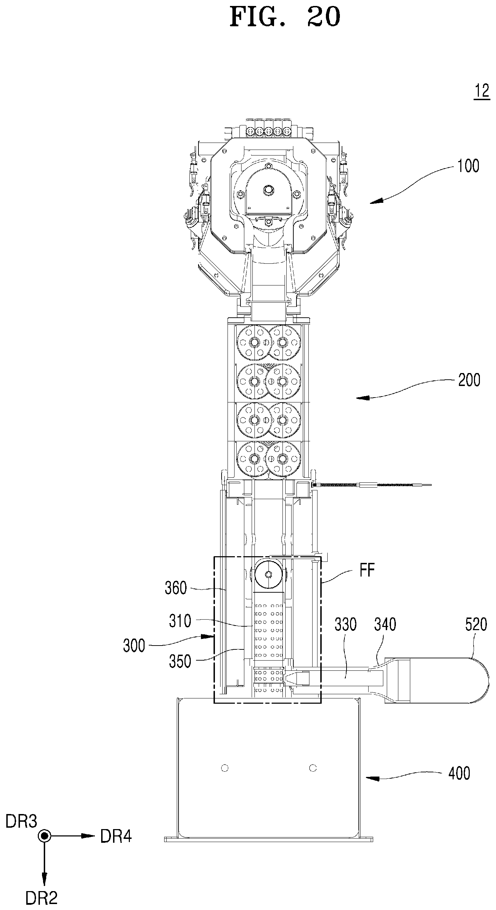

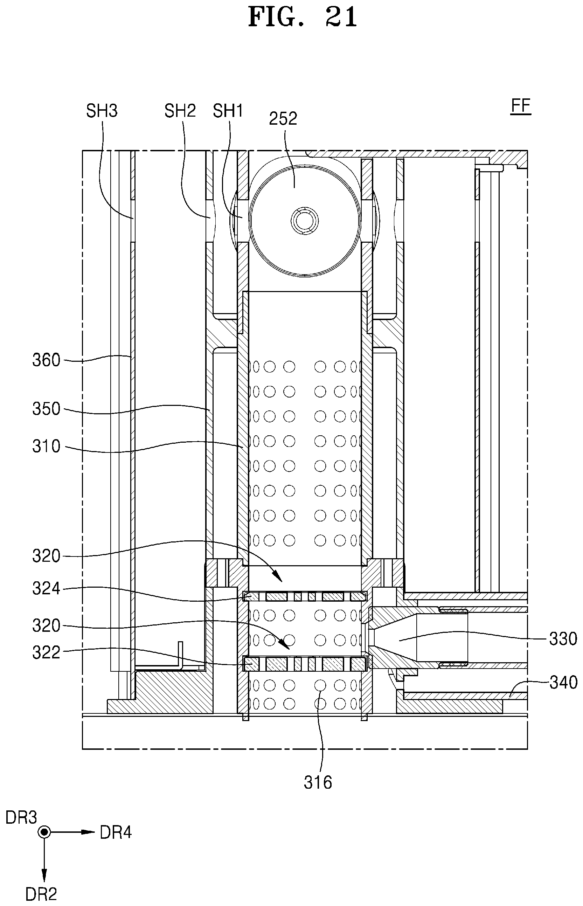

FIG. 20 is a cross-sectional view of a solid feces treater according to an example embodiment, corresponding to the line II-II' of FIG. 1. FIG. 21 is an enlarged view of the FF region of FIG. 20. For the sake of concise explanation, any description substantially identical to the explanations made with reference to FIGS. 1 to 15 may be omitted.

With reference to FIGS. 20 and 21, a solid feces treater 12 may be provided. The solid feces treater 12 may be substantially identical to the solid feces treater 12 with a difference in the combustor 300.

The combustor 300 may include the combustion drum 310, the first grid plate 322, the second grid plate 324, the igniter 330, the igniter case 340, the first combustion drum case 350, and the second combustion drum case 360. The first grid plate 322, the second grid plate 324, the igniter 330, the igniter case 340, the first combustion drum case 350, and the second combustion drum case 360 may respectively be substantially the same as described with reference to FIGS. 1 to 15.

However, unlike the description made with reference to FIGS. 1 to 15, the combustion drum 310 may include a plurality of third air holes 316 instead of the plurality of first air holes and the plurality of second air holes. The plurality of third air holes 316 may be arranged in a circumferential direction and a longitudinal direction (i.e., the second direction DR2) of the combustion drum 310. The plurality of third air holes 316 may be provided from an area adjacent to the transfer element 250 to an area between the first grid plate 322 and the recollect container 400. The plurality of third air holes 316 may provide more oxygen to the combustion path 302 than the plurality of first air holes and the plurality of second air holes. Accordingly, the third solid feces on the first grid plate 322 may be completely combusted. As such, a second combustion process (F2 of FIG. 18) to remove harmful gases is not required, and the combustion path 302 may not include an air compression area (302R of FIG. 14) described with reference to FIGS. 1 to 15. For example, the combustion path 302 may have a constant width.

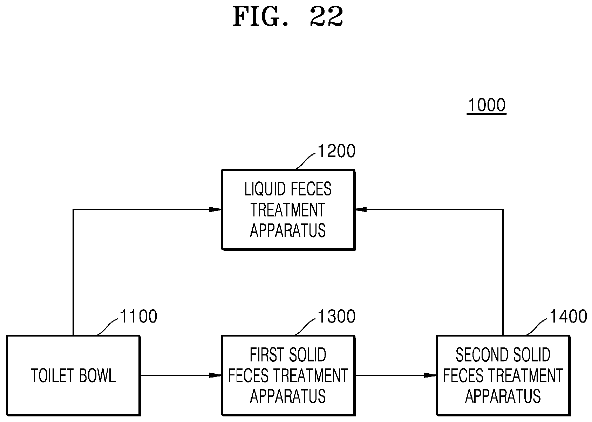

FIG. 22 is a block diagram of an individual feces treatment system according an example embodiment. For the sake of concise explanation, any description substantially identical to the explanations made with reference to FIGS. 1 to 15, FIG. 20, and FIG. 21 may be omitted.

With reference to FIG. 22, an individual feces treatment system 1000 may be provided. The individual feces treatment system 1000 may include a toilet bowl 1100, a liquid feces treatment apparatus 1200, a first solid feces treater 1300, and a second solid feces treater 1400.

The toilet bowl 1100 may collect feces from a user. The toilet bowl 1100 may separate and collect solid feces and liquid feces. For example, the toilet bowl 1100 may have a solid-liquid separation structure separating solid and liquid by using surface tension. The method of separating and collecting solid feces and liquid feces may be selected according to the need, and is not limited to one particular method. The solid feces may include excrement and tissues, and the liquid feces may include urine and flushing water.

The toilet bowl 1100 may provide liquid feces to the liquid feces treatment apparatus 1200. The liquid feces treatment apparatus 1200 may purify the liquid feces and generate flushing water used in a toilet bowl. The liquid feces treatment apparatus 1200 may supply flushing water to a toilet bowl. Accordingly, the individual feces treatment system 1000 of the present disclosure may save water supplied from the outside of the individual feces treatment system 1000.

The toilet bowl 1100 may provide solid feces to the first solid feces treater 1300. The first solid feces treater 1300 may water-treat the solid feces. For example, the solid feces may go through a precipitation process, a bio-reaction process, and a disinfection process. Sludge may be generated by the water treatment process. The first solid feces treater 1300 may provide the sludge to the second solid feces treater 1400.

The second solid feces treater 1400 may be substantially identical to the solid feces treater 10 described with reference to FIGS. 1 to 15 or the solid feces treater 12 described with reference to FIGS. 20 and 21. The sludge may be the first solid feces. The liquid components discharged from the dehydrator 100 may be supplied to and purified by the liquid component treatment apparatus.

The individual feces treatment system 1000 of the present disclosure may treat liquid feces and solid feces independently. Accordingly, the individual feces treatment system 1000 of the present disclosure may be suitable to be used in an environment without facilities to collect and treat feces.

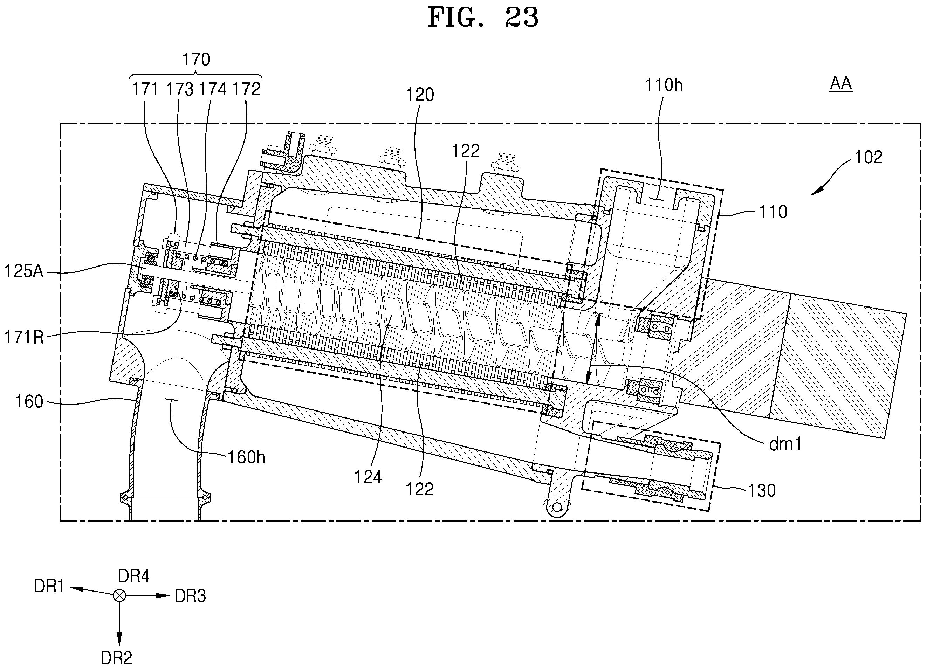

FIG. 23 is a diagram corresponding to the AA region of FIG. 3 to illustrate a dehydrator according to an example embodiment. For the sake of concise explanation, any description substantially identical to the explanations made with reference to FIGS. 6 to 11 may be omitted.

With reference to FIG. 23, a dehydrator 102 may be provided. The dehydrator 102 may be applied to the solid feces treater 10 described with reference to FIGS. 1 to 15 instead of the dehydrator 100 described with reference to FIGS. 6 to 11. The dehydrator 102 may include the first solid feces input element 110, the dehydration element 120, the liquid component discharge pipe 130, a pressure element 170, and the second solid feces discharger 160. The first solid feces input element 110, the dehydration element 120, the liquid component discharge pipe 130, and the second solid feces discharger 160 may be substantially the same as described with reference to FIGS. 6 to 11.

The pressure element 170 may apply pressure to the second solid feces to turn the second solid feces into a plurality of flakes (i.e. thin pieces). The pressure element 170 may include a supporting plate 171, a pressuring plate 172, a plurality of alignment members 173, and a spring 174. The supporting plate 171 may be coupled to a screw axis 124A extending from the dehydration screw 124 in the first direction DR1. The supporting plate 171 may have a fixed position. A distance between the supporting plate 171 and the dehydration element 120 may be constant. When the screw axis 124A rotates, the supporting plate 171 may also rotate. The supporting plate 171 may include a protruding portion 171R inserted into the spring 174. The supporting plate 171 may include alignment holes penetrating the alignment members 173.

The pressuring plate 172 may be provided between the supporting plate 171 and the dehydration element 120. The pressuring plate 172 and the supporting plate 171 may be arranged in order in the first direction DR1. Unlike the supporting plate 171, the pressuring plate 172 may not have a fixed position. The pressuring plate 172 may move in the first direction DR1. In an embodiment, the pressuring plate 172 may be arranged to be parallel with the supporting plate 171. The pressuring plate 172 may apply pressure to the second solid feces discharged from the dehydration element 120. The pressuring plate 172 may include alignment grooves into which the alignment members 173 are inserted and an elastic groove into which the spring 174 is inserted.

The alignment members 173 may extend in the first direction DR1 and penetrate the pressuring plate 172. The alignment members 173 may respectively be inserted into the alignment holes of the supporting plate 171. The alignment members 173 may not be coupled to the supporting plate 171. The alignment members 173 may move in the first direction DR1. When the pressuring plate 172 rotates, the alignment members 173 may rotate around the screw axis 124A. One end of the alignment members 173 may be inserted into the alignment groove of the pressuring plate 172.

The spring 174 may be provided between the pressuring plate 172 and the supporting plate 171. When the pressuring plate 172 and the supporting plate 171 are arranged farthest from each other, the spring 174 may apply force to the supporting plate 171 and the pressuring plate 172 in a direction to increase a distance between the supporting plate 171 and the pressuring plate 172. The spring 174 may push the supporting plate 171 and the pressuring plate 172 with more power when the pressuring plate 172 moves towards the supporting plate 171, compared to when the pressuring plate 172 and the supporting plate 171 are arranged farthest from each other. The protruding portion 171R of the supporting plate 171 may be inserted into one end of the spring 174. For example, an internal diameter of the spring 174 may be substantially identical to a diameter of the protruding portion 171R.

Hereinafter, a process of generating second solid feces in a shape of flakes, by the pressure element 170 is described.

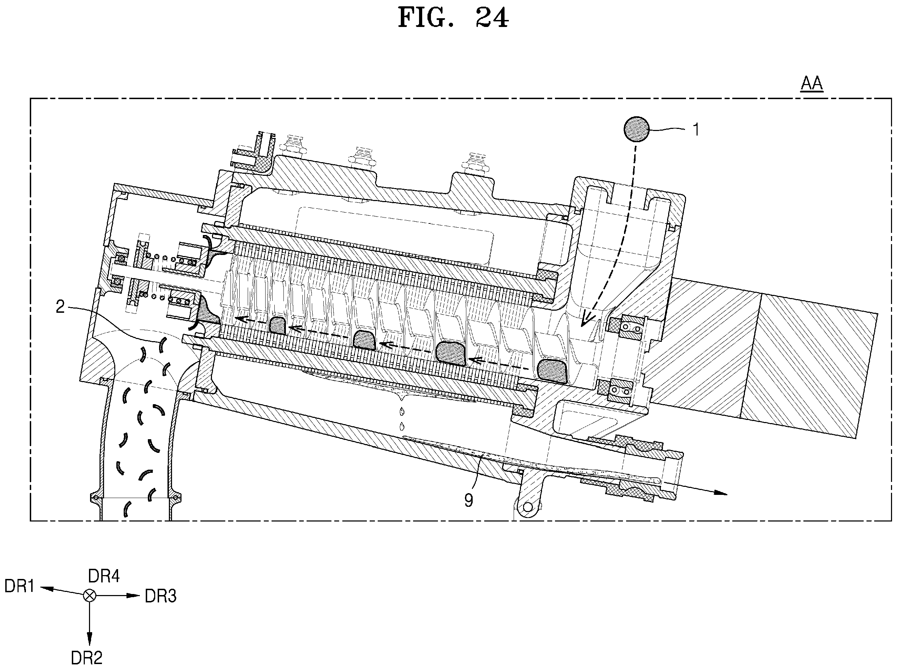

FIG. 24 is a diagram corresponding to the AA region of FIG. 3 to illustrate a process of treating solid feces. For the sake of concise explanation, any description substantially identical to the explanations made with reference to FIG. 16 may be omitted. For concise description, reference numerals for the components of the dehydrator 102 are omitted. The reference numerals for the components of the dehydrator 102 are as shown in FIG. 23.

With reference to FIG. 24, before the second solid feces 2 are provided, the pressuring plate 172 may be in contact with the dehydration element 120. The spring 174 may push the pressuring plate 172 towards the dehydration element 120.

The dehydration element 120 may receive the first solid feces 1 and generate the second solid feces 2. After the second solid feces 2 reach the pressuring plate 172, the pressuring plate 172 may be pushed by the second solid feces 2. When the force of second solid feces 2 pushing the pressuring plate 172 is greater than the force of the spring 174 pushing the pressuring plate 172, the pressuring plate 172 may be apart from the dehydration element 120. The second solid feces 2 may flow into an area between the pressuring plate 172 and the dehydration element 120.

When the pressuring plate 172 is apart from the dehydration element 120, the spring 174 may be compressed and may push the pressuring plate 172 even harder, compared to when the pressuring plate 172 is in contact with the dehydration element 120. The pressuring plate 172 may apply pressure to the second solid feces 2 flowing between the pressuring plate 172 and the dehydration element 120 and rotate. Accordingly, the second solid feces 2 may not be discharged continuously from the pressure element 170 but discharged in several pieces. The second solid feces 2 discharged from the pressure element 170 may have a shape of flakes (i.e., a shape of thin pieces).

## Claims

1. A solid feces treatment apparatus (10) comprising:
a dehydrator (100) extracting a liquid component from first solid feces to produce second solid feces;
a dryer (200) evaporating a liquid component of the second solid feces to produce third solid feces; and
a combustor (300) burning the third solid feces,
**characterized in that** the dryer comprises:
a first dry chamber (212) into which the second solid feces are input;
a first dry screw (222) provided in the first dry chamber;
a second dry chamber (214) discharging the third solid feces; and
a second dry screw (224) provided in the second dry chamber, and
wherein the second dry screw (224) has a thermal resistance higher than that of the first dry screw (222).

2. The solid feces treatment apparatus of claim 1, wherein the dehydrator comprises a dehydration element,
the dehydration element comprising:
a plurality of fixed discs and a plurality of moving discs, which are alternately arranged; and
a dehydration screw penetrating the plurality of fixed discs and the plurality of moving discs, and
wherein the plurality of moving discs move such that a center of each of the plurality of moving discs rotates around a centerline on which centers of the plurality of fixed discs are arranged, and optionally wherein a distance between a fixed disc and a moving disc immediately adjacent to each other, among the plurality of fixed discs and the plurality of moving discs, is less than or equal to 0.1 mm.

3. The solid feces treatment apparatus of claim 2, wherein the dehydration element includes a first dehydration area and a second dehydration area arranged sequentially in a transfer direction of the dehydration screw, and
wherein, among the plurality of fixed discs and the plurality of moving discs, a distance between a fixed disc and a moving disc immediately adjacent to each other in the first dehydration area is 0.05 mm, and a distance between a fixed disc and a moving disc immediately adjacent to each other in the second dehydration area is 0.03 mm.

4. The solid feces treatment apparatus of claim 2, wherein the dehydrator further comprises:
a discharge element including a discharge hole through which second solid feces produced from the dehydration element are discharged; and
a cutting element cutting the second solid feces discharged from the discharge hole, and
wherein the second solid feces cut by the cutting element have a pellet shape.

5. The solid feces treatment apparatus of claim 2, wherein an internal diameter of each of the plurality of moving discs is less than an internal diameter of each of the plurality of fixed discs.

6. The solid feces treatment apparatus of claim 2, wherein the dehydrator further comprises a pressure element applying pressure on second solid feces discharged from the dehydration element, and
wherein the second solid feces are discharged between the pressure element and the dehydration element, and have a flake shape.

7. The solid feces treatment apparatus of claim 1, wherein the first dry screw includes aluminum, and wherein the second dry screw includes stainless steel.

8. The solid feces treatment apparatus of claim 1, wherein the first dry screw and the second dry screw include a plurality of dry holes penetrating a thread of the first dry screw and a thread of the second dry screw.

9. The solid feces treatment apparatus of claim 1, wherein each of the first dry screw and the second dry screw is provided in a pair, and
wherein a pair of first dry screws is arranged such that threads of the first dry screws cross each other, and a pair of second dry screws is arranged such that threads of the second dry screws cross each other.

10. The solid feces treatment apparatus of claim 1, wherein the dryer further comprises:
a third dry chamber provided between the first dry chamber and the second dry chamber;
a third dry screw provided in the third dry chamber;
a fourth dry chamber provided between the second dry chamber and the third dry chamber; and
a fourth dry screw provided in the fourth dry chamber, and
wherein the second solid feces are dried sequentially in the first dry chamber, the third dry chamber, the fourth dry chamber, and the second dry chamber.

11. The solid feces treatment apparatus of claim 1, wherein the dryer further comprises an intake element connected to the first dry chamber, and
wherein the intake element circulates heat generated from the combustor in the dryer.

12. The solid feces treatment apparatus of claim 1, wherein a lower portion of the second dry chamber has a thermal conductivity higher than that of the first dry chamber.

13. The solid feces treatment apparatus of claim 1, wherein the combustor comprises:
a combustion drum defining a combustion path therein;
a first grid plate provided at a lower portion of the combustion drum; and
an ignition element combusting the third solid feces placed on the first grid plate, and optionally wherein the combustion drum further includes a plurality of first air holes provided under the first grid plate, and further optionally wherein the combustion path further includes an air compression area in which air is compressed, and
wherein the combustion path has a relatively narrow width in the air compression area, and yet further optionally wherein the combustion drum further includes a plurality of second air holes provided adjacent to the air compression area.

14. An individual feces treatment system (1000) comprising:
a toilet bowl (1100);
a liquid feces treatment apparatus (1200) receiving and treating liquid feces from the toilet bowl;
a first solid feces treatment apparatus (1300) receiving solid feces from the toilet bowl and water-treating the solid feces to produce first solid feces in a state of sludge; and
a second solid feces treatment apparatus (1400) according to claim 1 for receiving the first solid feces from the first solid feces treatment apparatus and treating the first solid feces.

15. A method for solid feces treatment, the method comprising:
extracting, using a dehydrator, a liquid component from first solid feces to produce second solid feces;
evaporating, using a dryer, a liquid component of the second solid feces to produce third solid feces; and
burning, using a combustor, the third solid feces;
wherein the second solid feces have a solid content of 25 % to 30 %, and the third solid feces have a solid content greater than or equal to 90 % and less than 100 %; and
wherein evaporating, using the dryer, comprises:
inputting the second solid feces into a first dry chamber, wherein a first dry screw is provided in the first dry chamber; and
discharging the third solid feces from a second dry chamber, wherein a second dry screw is provided in the second dry chamber and wherein the second dry screw has a thermal resistance higher than that of the first dry screw.

## Patentansprüche

1. Vorrichtung (10) zur Behandlung von festen Fäkalien, umfassend:
einen Dehydrator (100), der eine flüssige Komponente aus ersten festen Fäkalien extrahiert, um zweite feste Fäkalien zu erzeugen;
einen Trockner (200), der eine flüssige Komponente der zweiten festen Fäkalien verdampft, um dritte feste Fäkalien zu erzeugen; und
eine Brennkammer (300), welche die dritten festen Fäkalien verbrennt,
**dadurch gekennzeichnet, dass** der Trockner Folgendes umfasst:
eine erste Trockenkammer (212), in welche die zweiten festen Fäkalien eingeführt werden;
eine erste Trockenschnecke (222), die in der ersten Trockenkammer bereitgestellt ist;
eine zweite Trockenkammer (214), welche die dritten festen Fäkalien abgibt; und
eine zweite Trockenschnecke (224), die in der zweiten Trockenkammer bereitgestellt ist, und
wobei die zweite Trockenschnecke (224) einen höheren Wärmewiderstand als den der ersten Trockenschnecke (222) aufweist.

2. Vorrichtung zur Behandlung von festen Fäkalien nach Anspruch 1, wobei der Dehydrator ein Dehydrierungselement umfasst,
wobei das Dehydrierungselement Folgendes umfasst:
eine Vielzahl von festen Scheiben und eine Vielzahl von beweglichen Scheiben, die abwechselnd angeordnet sind; und
eine Dehydrierungsschnecke, welche die Vielzahl von festen Scheiben und die Vielzahl von beweglichen Scheiben durchdringt, und
wobei sich die Vielzahl von beweglichen Scheiben derart bewegt, dass sich ein Zentrum jeder aus der Vielzahl von beweglichen Scheiben um eine Mittellinie dreht, auf der Zentren der Vielzahl von festen Scheiben angeordnet sind, und wobei optional eine Entfernung zwischen einer festen Scheibe und einer beweglichen Scheibe, die unmittelbar benachbart zueinander sind, aus der Vielzahl von festen Scheiben und der Vielzahl von beweglichen Scheiben kleiner oder gleich 0,1 mm ist.

3. Vorrichtung zur Behandlung von festen Fäkalien nach Anspruch 2, wobei das Dehydrierungselement einen ersten Dehydrierungsbereich und einen zweiten Dehydrierungsbereich beinhaltet, die aufeinanderfolgend in einer Transferrichtung der Dehydrierungsschnecke angeordnet sind, und
wobei unter der Vielzahl von festen Scheiben und der Vielzahl von beweglichen Scheiben eine Entfernung zwischen einer festen Scheibe und einer beweglichen Scheibe, die unmittelbar benachbart zueinander sind, in dem ersten Dehydrierungsbereich 0,05 mm beträgt und eine Entfernung zwischen einer festen Scheibe und einer beweglichen Scheibe, die unmittelbar benachbart zueinander sind, in dem zweiten Dehydrierungsbereich 0,03 mm beträgt.

4. Vorrichtung zur Behandlung von festen Fäkalien nach Anspruch 2, wobei der Dehydrator ferner Folgendes umfasst:
ein Abgabeelement, das ein Abgabeloch beinhaltet, durch das zweite feste Fäkalien, die von dem Dehydrierungselement erzeugt werden, abgegeben werden; und
ein Schneidelement, das die zweiten festen Fäkalien schneidet, die aus dem Abgabeloch abgegeben werden, und
wobei die zweiten festen Fäkalien, die durch das Schneidelement geschnitten werden, eine Pelletform aufweisen.

5. Vorrichtung zur Behandlung von festen Fäkalien nach Anspruch 2, wobei ein Innendurchmesser von jeder aus der Vielzahl von beweglichen Scheiben kleiner als ein Innendurchmesser von jeder der Vielzahl von festen Scheiben ist.

6. Vorrichtung zur Behandlung von festen Fäkalien nach Anspruch 2, wobei der Dehydrator ferner ein Druckelement umfasst, das Druck auf zweite feste Fäkalien ausübt, die von dem Dehydrierungselement abgegeben werden, und
wobei die zweiten festen Fäkalien zwischen dem Druckelement und dem Dehydrierungselement abgegeben werden und eine Flockenform aufweisen.

7. Vorrichtung zur Behandlung von festen Fäkalien nach Anspruch 1, wobei die erste Trockenschnecke Aluminium beinhaltet und wobei die zweite Trockenschnecke Edelstahl beinhaltet.

8. Vorrichtung zur Behandlung von festen Fäkalien nach Anspruch 1, wobei die erste Trockenschnecke und die zweite Trockenschnecke eine Vielzahl von Trockenlöchern beinhalten, die ein Gewinde der ersten Trockenschnecke und ein Gewinde der zweiten Trockenschnecke durchdringen.

9. Vorrichtung zur Behandlung von festen Fäkalien nach Anspruch 1, wobei sowohl die erste Trockenschnecke als auch die zweite Trockenschnecke in einem Paar bereitgestellt sind und
wobei ein Paar erster Trockenschnecken derart angeordnet ist, dass sich Gewinde der ersten Trockenschnecken kreuzen, und ein Paar zweiter Trockenschnecken derart angeordnet ist, dass sich Gewinde der zweiten Trockenschnecken kreuzen.

10. Vorrichtung zur Behandlung von festen Fäkalien nach Anspruch 1, wobei der Trockner ferner Folgendes umfasst:
eine dritte Trockenkammer, die zwischen der ersten Trockenkammer und der zweiten Trockenkammer bereitgestellt ist;
eine dritte Trockenschnecke, die in der dritten Trockenkammer bereitgestellt ist;
eine vierte Trockenkammer, die zwischen der zweiten Trockenkammer und der dritten Trockenkammer bereitgestellt ist; und
eine vierte Trockenschnecke, die in der vierten Trockenkammer bereitgestellt ist, und
wobei die zweiten festen Fäkalien nacheinander in der ersten Trockenkammer, der dritten Trockenkammer, der vierten Trockenkammer und der zweiten Trockenkammer getrocknet werden.

11. Vorrichtung zur Behandlung von festen Fäkalien nach Anspruch 1, wobei der Trockner ferner ein Aufnahmeelement umfasst, das mit der ersten Trockenkammer verbunden ist, und
wobei das Aufnahmeelement von der Brennkammer in dem Trockner generierte Wärme zirkuliert.

12. Vorrichtung zur Behandlung von festen Fäkalien nach Anspruch 1, wobei ein unterer Abschnitt der zweiten Trockenkammer eine höhere Wärmeleitfähigkeit als die der ersten Trockenkammer aufweist.

13. Vorrichtung zur Behandlung von festen Fäkalien nach Anspruch 1, wobei die Brennkammer ferner Folgendes umfasst:
eine Verbrennungstrommel, die darin einen Verbrennungsweg definiert;
eine erste Gitterplatte, die an einem unteren Abschnitt der Verbrennungstrommel bereitgestellt ist; und
ein Zündelement, das die dritten festen Fäkalien verbrennt, die auf der ersten Gitterplatte platziert sind, und wobei die Verbrennungstrommel optional ferner eine Vielzahl von ersten Luftlöchern beinhaltet, die unter der ersten Gitterplatte bereitgestellt sind, und wobei der Verbrennungsweg optional ferner einen Luftkompressionsbereich beinhaltet, in dem Luft komprimiert wird, und
wobei der Verbrennungsweg in dem Luftkompressionsbereich eine relativ geringe Breite aufweist und wobei die Verbrennungstrommel noch ferner optional eine Vielzahl von zweiten Luftlöchern beinhaltet, die benachbart zu dem Luftkompressionsbereich bereitgestellt ist.

14. System (1000) zur Behandlung von individuellen Fäkalien, umfassend:
eine Toilettenschüssel (1100);
eine Vorrichtung (1200) zur Behandlung von flüssigen Fäkalien, die flüssige Fäkalien aus der Toilettenschüssel empfängt und behandelt;
eine erste Vorrichtung (1300) zur Behandlung von festen Fäkalien, die feste Fäkalien aus der Toilettenschüssel empfängt und die festen Fäkalien wasserbehandelt, um erste feste Fäkalien in einem Zustand von Schlamm zu erzeugen; und
eine zweite Vorrichtung (1400) zur Behandlung von festen Fäkalien nach Anspruch 1 zum Empfangen der ersten festen Fäkalien von der ersten Vorrichtung zur Behandlung von festen Fäkalien und zum Behandeln der ersten festen Fäkalien.

15. Verfahren zur Behandlung von festen Fäkalien, wobei das Verfahren Folgendes umfasst:
Extrahieren einer flüssigen Komponente aus ersten festen Fäkalien unter Verwendung eines Dehydrators, um zweite feste Fäkalien zu erzeugen;
Verdampfen einer flüssigen Komponente der zweiten festen Fäkalien unter Verwendung eines Trockners, um dritte feste Fäkalien zu erzeugen; und
Verbrennen der dritten festen Fäkalien unter Verwendung einer Brennkammer;
wobei die zweiten festen Fäkalien einen Feststoffgehalt von 25 % bis 30 % aufweisen und die dritten festen Fäkalien einen Feststoffgehalt von mehr als oder gleich 90 % und weniger als 100 % aufweisen; und
wobei das Verdampfen unter Verwendung des Trockners Folgendes umfasst:
Einführen der zweiten festen Fäkalien in eine erste Trockenkammer, wobei eine erste Trockenschnecke in der ersten Trockenkammer bereitgestellt ist; und
Abgeben der dritten festen Fäkalien aus einer zweiten Trockenkammer, wobei eine zweite Trockenschnecke in der zweiten Trockenkammer bereitgestellt ist und wobei die zweite Trockenschnecke einen höheren Wärmewiderstand als den der ersten Trockenschnecke aufweist.

## Revendications

1. Appareil de traitement de matière fécale solide (10), comprenant :
un déshydrateur (100) extrayant un composant liquide d'une première matière fécale solide pour produire une deuxième matière fécale solide ;
un sécheur (200) évaporant un composant liquide de la deuxième matière fécale solide pour produire une troisième matière fécale solide ; et
une chambre de combustion (300) brûlant la troisième matière fécale solide,
**caractérisé en ce que** le sécheur comprend :
une première chambre sèche (212) dans laquelle la deuxième matière fécale solide est introduite ;
une première vis sèche (222) disposée dans la première chambre sèche ;
une deuxième chambre sèche (214) évacuant la troisième matière fécale solide ; et
une deuxième vis sèche (224) disposée dans la deuxième chambre sèche, et
dans lequel la deuxième vis sèche (224) possède une résistance thermique supérieure à celle de la première vis sèche (222).

2. Appareil de traitement de matière fécale solide selon la revendication 1, dans lequel le déshydrateur comprend un élément de déshydratation,
l'élément de déshydratation comprenant :
une pluralité de disques fixes et une pluralité de disques mobiles, qui sont agencés en alternance ; et
une vis de déshydratation pénétrant dans la pluralité de disques fixes et la pluralité de disques mobiles, et
dans lequel la pluralité de disques mobiles se déplacent de telle sorte qu'un centre de chacun de la pluralité de disques mobiles tourne autour d'une ligne centrale sur laquelle des centres de la pluralité de disques fixes sont agencés, et éventuellement dans lequel une distance entre un disque fixe et un disque mobile immédiatement adjacents l'un à l'autre, parmi la pluralité de disques fixes et la pluralité de disques mobiles, est inférieure ou égale à 0,1 mm.

3. Appareil de traitement de matière fécale solide selon la revendication 2, dans lequel l'élément de déshydratation comprend une première zone de déshydratation et une seconde zone de déshydratation agencées séquentiellement dans une direction de transfert de la vis de déshydratation, et
dans lequel, parmi la pluralité de disques fixes et la pluralité de disques mobiles, une distance entre un disque fixe et un disque mobile immédiatement adjacents l'un à l'autre dans la première zone de déshydratation est de 0,05 mm, et une distance entre un disque fixe et un disque mobile immédiatement adjacents l'un à l'autre dans la seconde zone de déshydratation est de 0,03 mm.

4. Appareil de traitement de matière fécale solide selon la revendication 2, dans lequel le déshydrateur comprend en outre :
un élément d'évacuation comprenant un trou d'évacuation à travers lequel la deuxième matière fécale solide produite à partir de l'élément de déshydratation est évacuée ; et
un élément de coupe coupant la deuxième matière fécale solide évacuée du trou d'évacuation, et
dans lequel la deuxième matière fécale solide coupée par l'élément de coupe a une forme de granulés.

5. Appareil de traitement de matière fécale solide selon la revendication 2, dans lequel un diamètre interne de chacun de la pluralité de disques mobiles est inférieur à un diamètre interne de chacun de la pluralité de disques fixes.

6. Appareil de traitement de matière fécale solide selon la revendication 2, dans lequel le déshydrateur comprend en outre un élément de pression appliquant une pression sur la deuxième matière fécale solide évacuée de l'élément de déshydratation, et
dans lequel la deuxième matière fécale solide est évacuée entre l'élément de pression et l'élément de déshydratation, et a une forme de flocons.

7. Appareil de traitement de matière fécale solide selon la revendication 1, dans lequel la première vis sèche comprend de l'aluminium, et dans lequel la deuxième vis sèche comprend de l'acier inoxydable.

8. Appareil de traitement de matière fécale solide selon la revendication 1, dans lequel la première vis sèche et la deuxième vis sèche comprennent une pluralité de trous secs pénétrant dans un filet de la première vis sèche et un filet de la deuxième vis sèche.

9. Appareil de traitement de matière fécale solide selon la revendication 1, dans lequel chacune de la première vis sèche et de la deuxième vis sèche est fournie par paire, et
dans lequel une paire de premières vis sèches est agencée de telle sorte que les filets des premières vis sèches se croisent, et une paire de deuxièmes vis sèches est agencée de telle sorte que les filets des deuxièmes vis sèches se croisent.

10. Appareil de traitement de matière fécale solide selon la revendication 1, dans lequel le sécheur comprend en outre :
une troisième chambre sèche disposée entre la première chambre sèche et la deuxième chambre sèche ;
une troisième vis sèche disposée dans la troisième chambre sèche ;
une quatrième chambre sèche disposée entre la deuxième chambre sèche et la troisième chambre sèche ; et
une quatrième vis sèche disposée dans la quatrième chambre sèche, et
dans lequel la deuxième matière fécale solide est séchée séquentiellement dans la première chambre sèche, la troisième chambre sèche, la quatrième chambre sèche et la deuxième chambre sèche.

11. Appareil de traitement de matière fécale solide selon la revendication 1, dans lequel le sécheur comprend en outre un élément d'admission connecté à la première chambre sèche, et
dans lequel l'élément d'admission fait circuler la chaleur générée par la chambre de combustion dans le sécheur.

12. Appareil de traitement de matière fécale solide selon la revendication 1, dans lequel une partie inférieure de la deuxième chambre sèche a une conductivité thermique supérieure à celle de la première chambre sèche.

13. Appareil de traitement de matière fécale solide selon la revendication 1, dans lequel la chambre de combustion comprend :
un tambour de combustion définissant un chemin de combustion dans celui-ci ;
une première plaque grille disposée au niveau d'une partie inférieure du tambour de combustion ; et
un élément d'allumage brûlant la troisième matière fécale solide placée sur la première plaque grille, et éventuellement dans lequel le tambour de combustion comprend en outre une pluralité de premiers trous d'air disposés sous la première plaque grille, et éventuellement en outre dans lequel le chemin de combustion comprend en outre une zone de compression d'air dans laquelle l'air est comprimé, et
dans lequel le chemin de combustion a une largeur relativement étroite dans la zone de compression d'air, et encore en outre éventuellement dans lequel le tambour de combustion comprend en outre une pluralité de seconds trous d'air disposés adjacents à la zone de compression d'air.

14. Système de traitement de matière fécale individuelle (1000), comprenant :
une cuvette de toilettes (1100) ;
un appareil de traitement de matière fécale liquide (1200) recevant et traitant une matière fécale liquide depuis la cuvette de toilettes ;
un premier appareil de traitement de matière fécale solide (1300) recevant une matière fécale solide depuis la cuvette de toilettes et traitant à l'eau la matière fécale solide pour produire la première matière fécale solide dans un état de boue ; et
un second appareil de traitement de matière fécale solide (1400) selon la revendication 1 pour recevoir la première matière fécale solide provenant du premier appareil de traitement de matière fécale solide et traiter la première matière fécale solide.

15. Procédé permettant le traitement de matière fécale solide, le procédé comprenant :
l'extraction, à l'aide d'un déshydrateur, d'un composant liquide à partir de la première matière fécale solide pour produire une deuxième matière fécale solide ;
l'évaporation, à l'aide d'un sécheur, d'un composant liquide de la deuxième matière fécale solide pour produire une troisième matière fécale solide ; et
la combustion, à l'aide d'une chambre de combustion, de la troisième matière fécale solide ;
dans lequel la deuxième matière fécale solide a une teneur en matières solides de 25 % à 30 %, et la troisième matière fécale solide a une teneur en matières solides supérieure ou égale à 90 % et inférieure à 100 % ; et
dans lequel l'évaporation, à l'aide du sécheur, comprend :
l'introduction de la deuxième matière fécale solide dans une première chambre sèche, dans lequel une première vis sèche est disposée dans la première chambre sèche ; et
**l'évacuation** de la troisième matière fécale solide d'une deuxième chambre sèche, dans lequel une deuxième vis sèche est disposée dans la deuxième chambre sèche et dans lequel la deuxième vis sèche a une résistance thermique supérieure à celle de la première vis sèche.
